# EUROPEAN PATENT APPLICATION

(11) **EP 2 484 252 A1**
(43) Date of publication of application: **08.08.2012**
(21) Application number: 12000683.8
(22) Date of filing: 02.02.2012
(51) Int. Cl.: A47J 31/36

(54) **Machine for preparing beverages by infusion**

(30) Priority: 07.02.2011 IT MI20110171
(71) Applicant: EMMEBIELLE S.R.L., 21049 Tradate (VA) (IT)
(72) Inventor: Blanchino, Francesco, 22076 Mozzate (CO) (IT); Manunta, Mauro, 21049 Tradate (VA) (IT)
(74) Representative: Gatti, Enrico

(57) **Abstract**

The machine for preparing beverages by infusion of capsules (34) with a projecting edge (39) is provided with an infusion unit (10) comprising:
- a piston (35; 35A) movable in the two directions between a first and a second position;
- a chamber (31; 31A) with a seat (33) for receiving a capsule (34);
A profile follower element (20) is rigid with the piston (35; 35A) to cooperate with a corresponding profile (25) rigid with the chamber (31; 31A), and shaped to move the chamber (31; 31A) from its first to its second position, and vice versa, as a consequence of the movement of the piston (35; 35A) from its first to its second position and vice versa.

## Description

The present invention relates to a machine for preparing beverages by infusion, in particular coffee, tea, cappuccino and the like, by means of capsules containing the substance which when infused produces the relative beverage.

Infusion capsules are known to be of substantially frusto-conical shape with the major base provided with a projecting edge. These are initially filled with the substance from which the required beverage is obtained by infusion.

Machines of the aforesaid type are described in Italian patent applications BG2009A000021 and BG2009A000022 and comprise an infusion unit comprising:
- a piston moving in the two directions between a first or rest position and a second or working position;
- a chamber provided with a seat for receiving an infusion capsule, the chamber being rotatable about a horizontal fixed pin to swivel between a first position in which the capsule is inserted, and a second or working position in which it cooperates with the piston when in its second position to seal the capsule within the chamber;
- drive means comprising a lever system, to move the piston and chamber from their first to their second position, and vice versa;
- means for extracting the used capsule from the chamber when this latter, after the infusion, is returned to its first position, such that the used capsule falls by gravity below the infusion unit.

The means for extracting the capsule from the chamber when infusion has taken place consist essentially of an elastic element (in particular a helical spring) disposed on the base of the chamber seat, and compressed when the chamber and piston are in the second (working) position so that, when the chamber and piston begin to mutually withdraw, it causes the capsule to be expelled from its seat as a consequence.

However these machines present drawbacks. In particular, said drive means are composed of several parts. Moreover, it can happen that when a user inserts a capsule into the infusion unit, if care is not taken the capsule can lie incorrectly, with the result that the machine does not operate correctly.

An object of the present invention is to provide a machine of the described type in which the infusion unit comprises piston and chamber drive means which are simpler and are composed of fewer parts than the infusion units of BG2009A000021 and BG2009A000022.

Another object is to provide a machine of the described type in which, when a capsule is inserted into the infusion unit, it is not possible for it to lie incorrectly disposed. The initially stated object is attained by the machine of the present invention, which is of the aforedescribed type, characterised in that rigid with the piston there is a profile follower element adapted to cooperate with a corresponding profile rigid with the chamber, said profile being shaped such as to cause the chamber to move from its first to its second position, and vice versa, in response to the movement of the piston from its first position to its second position, and vice versa.

From the aforegoing it is easily apparent that the drive means used in the infusion unit of the machine according to the invention are extremely simple and are composed of a smaller number of pieces than in the aforesaid known art, the machine consequently being more reliable and requiring lesser and simpler maintenance.

Before explaining how the second aforestated object is attained, it should noted that EP-B-1721553 describes an infusion unit for a machine of the stated type, this unit essentially comprising:
- a chamber movable horizontally in the two directions and provided with a seat for receiving an infusion capsule, the chamber able to be moved from a first or rest position to a second or working position; a fixed counteracting block for the chamber when this latter arrives in its second position, such that the capsule contained in the chamber remains sealedly enclosed between the chamber and the counteracting block;
- two opposing guides movable towards and away from each other, they being provided with a relative lowerly closed vertical groove into which when the guides are close together the corresponding part of the capsule projecting edge is inserted, such that the capsule remains retained in a position which enables it to be received in the seat of the chamber when this latter passes from its first to its second position;
- means for moving the guides away from and towards each other such as to release the capsule, following the movement apart of the guides, just before the capsule is completely received in the seat of the chamber by the movement of this latter into its second position;
- means for extracting the used capsule from the chamber when this latter, with the guides moved apart, is returned into its first position, by which the used capsule falls by gravity below the infusion unit.

As will be easily understood, said guides prevent the capsule, when inserted into the infusion unit, from being able to assume an incorrect position.

The aforestated second object can therefore be attained by using, in the infusion unit of the machine of the present invention, guides similar to those just described.

The invention will be more apparent from the ensuing description of one embodiment thereof. In this description reference is made to the accompanying drawings, in which:
Figure 1 is a vertical longitudinal section through an infusion unit of the machine according to the present invention, in its rest condition;
Figures 2-6 show the successive steps which enable the infusion unit to be moved from its rest condition (Figure 1) to its working condition (Figure 6);
Figures 7-9 show the successive steps by which the infusion unit is returned from its working condition (Figure 6) to its rest condition;
Figure 10 is a top plan view of the infusion unit in that step corresponding to Figure 2;
Figure 11 is a top plan view of the infusion unit in that step corresponding to Figure 6;
Figure 12 is an elevational view of the infusion unit taken in the direction of the arrow A of Figure 11;
Figures 13-18 represent a partial longitudinal vertical section through a variant of the infusion unit for the machine of the present invention, showing a type of means for extraction the capsule from the chamber.

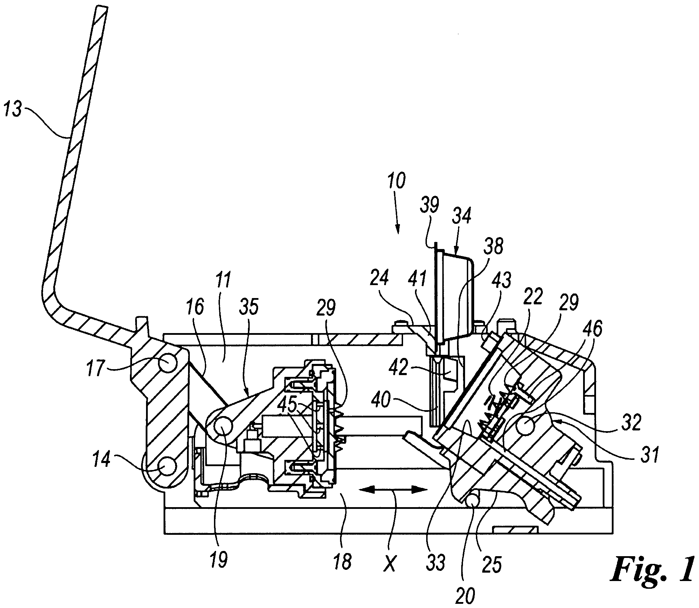

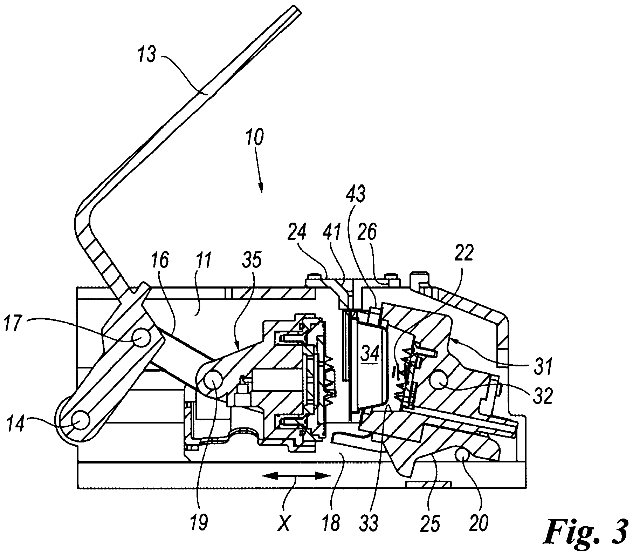

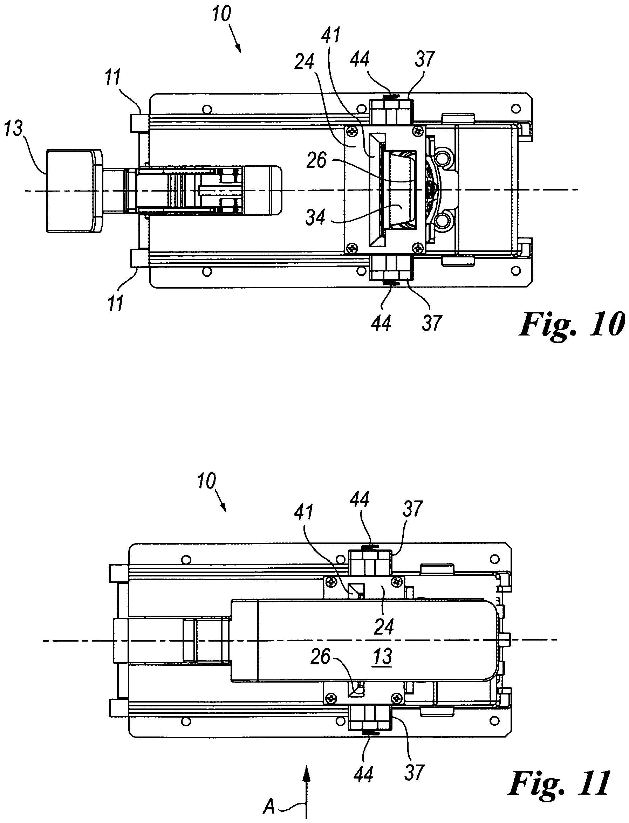

From Figures 1-12 it can be seen that the infusion unit 10 of the machine according to the invention comprises lateral and longitudinal containing shoulders 11 joined together by pins (not shown for simplicity). An operating lever 13, pivoted on a horizontal pivot 14 fixed to the shoulders 11, is rotatably connected to a connecting rod 16 by a pin 17. That end of the connecting rod 16 distant from the pin 17 is hinged to a piston 35 by a pin 19. Conventional means (for example a pair of guides formed in the shoulders 11) are provided to cause the piston 35, by operating the lever 13 in one direction or the other, to translate longitudinally in the two senses (in the direction X of Figure 1) without rotating.

Rigid with the piston 35 there are two arms 18, disposed each on one side of the piston and extending longitudinally towards the chamber 31.

The free ends of the arms 18 are connected together by a transverse bar 20 the function of which will be apparent hereinafter.

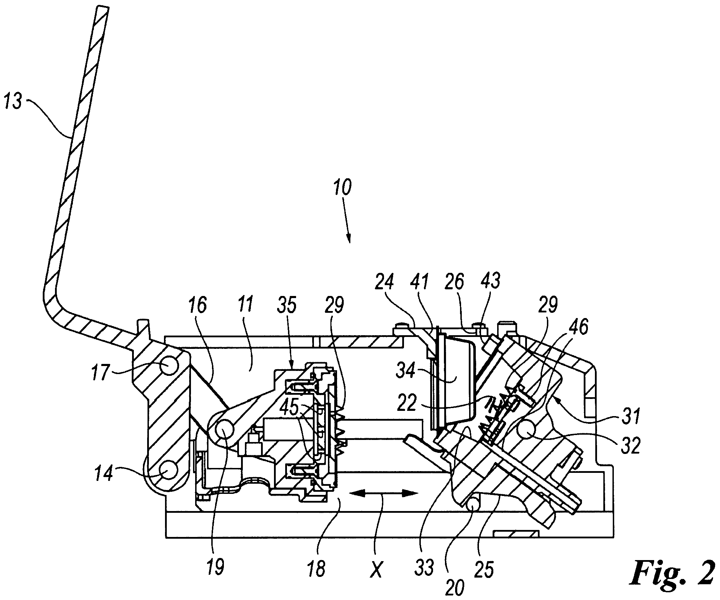

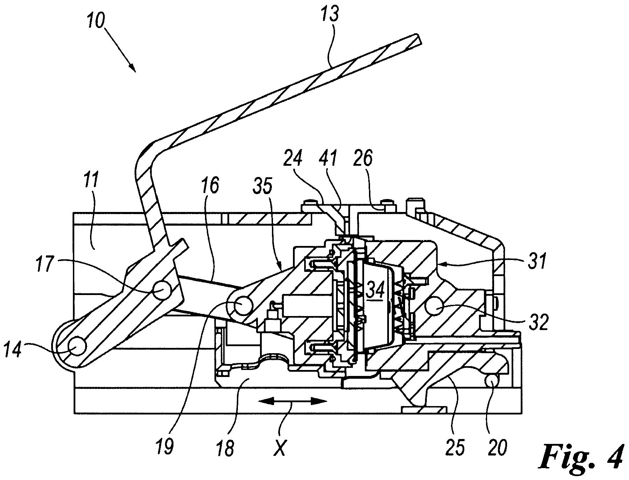

The unit 10 also comprises a chamber 31 hinged to the shoulders by a pin 32 which enables it to swivel between a first or rest position (Figures 1 and 2) and a second or working position (Figures 4-6) (in which the infusion takes place).

The chamber 31 lowerly presents a shaped profile 25 adapted to cooperate (by virtue of the weight of the chamber 31) with the bar 20, known hereinafter as the profile follower bar. The shaped profile 25 is chosen such that, when the operating lever 13 is moved from the position of Figure 2 to the position of Figure 4 (to consequently shift the piston 35, and hence the profile follower bar 20), the bar 20 follows the profile 25. Consequently the chamber 31 undergoes a rocking movement which moves it from its first or rest position (Figure 2) to its second or working position (Figure 4).

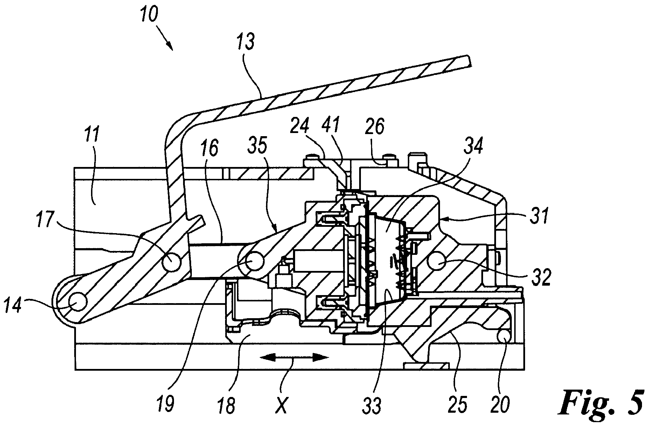

If a capsule 34 has been inserted into the infusion unit 10 through an opening 26 provided in a cover 24 such that it lies in the position of Figure 2, by operating the lever 13 the capsule 34 is made to enter the seat 33 of the chamber 31 (Figure 4), and the piston 35 is made to advance towards the chamber 31. By further operating the lever 13, the capsule 34 is completely received in the seat 33 (Figure 5) against the action of the spring 22 (which for simplicity is shown undeformed in Figure 5, whereas in effect it would be squeezed between the capsule 34 and the base of the seat 33), with the piston 35 pressed against the shoulder 31 such as to sealedly close the capsule 34 within the seat 33, so that infusion can take place.

It should be noted that in this specific case the spring 22 constitutes said means for extracting the capsule 34, once used, from the seat 33 of the chamber 31.

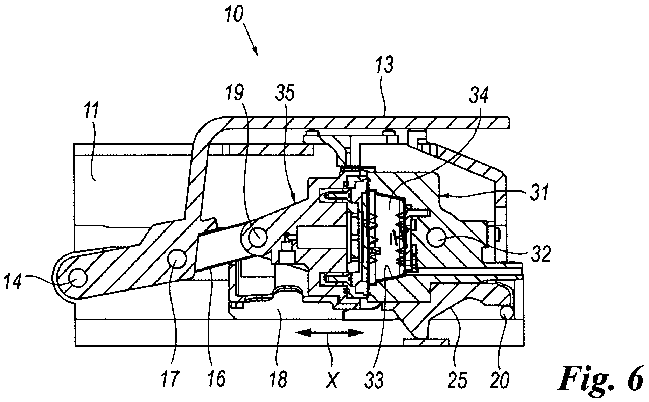

The presence (Figure 1), both on that face of the piston 35 facing the chamber 31 and on the base of the seat 33, of conventional means 29 for perforating the capsule 34, and of conventional channels (45, 46) for enabling a suitable infusion liquid (particularly water) to pass through the capsule 34 when the unit 10 is in its working condition (Figure 6), enables the required beverage to be obtained. To facilitate insertion of the capsule 34 into the unit 10 in the specific illustrated case, this latter is provided with two opposing guides 37 each disposed on one side of the unit 10, they being carried by the relative shoulders and projecting inwards through corresponding windows 38 (Figure 1) provided in said shoulders. Each guide 37 inwardly presents a corresponding vertical groove 40 (Figure 1) to receive the projecting edge 39 of an infusion capsule 34 when this latter is inserted through an insertion aperture 26 provided in a .cover 24. A bevel 41 enables the capsule 34 to be more easily inserted into the aperture 26.

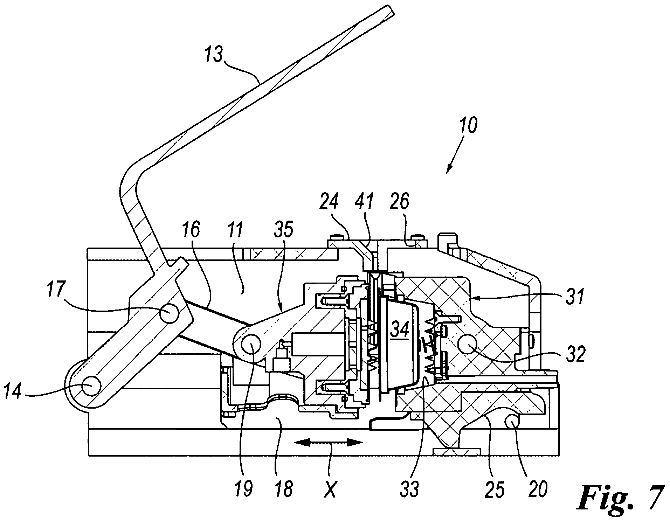

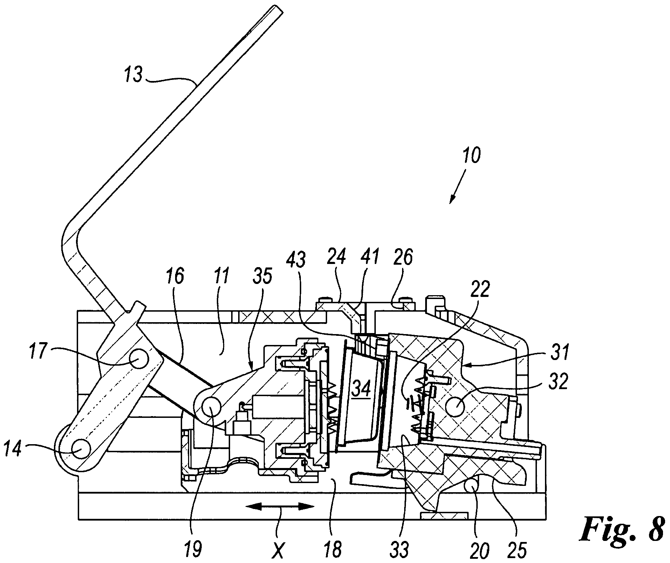

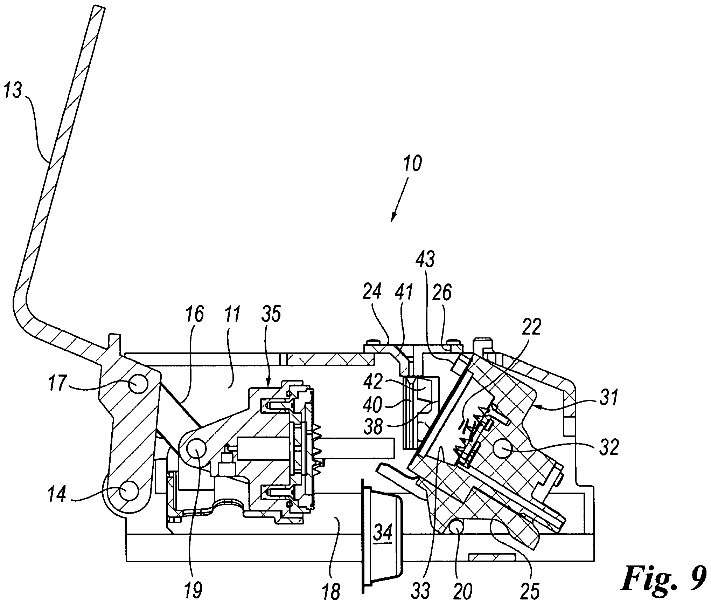

As already stated, means are provided to move the guides 37 away from each other in order to free the capsule 34 just before it is completely received in the seat 33 of the chamber 31 following movement of this latter into its second position. These means essentially comprise an inclined surface 42 (Figure 1) provided in each guide 37 to cooperate with a relative projection 43 with which the chamber 31 is provided, such that just before the chamber reaches its second or working position, the two projections 43, by pressing against the relative inclined surface 42, cause the guides 37 to move outwards against the action of a relative elastic return element 44 (in particular a helical spring). The capsule 34 is hence released and immediately afterwards is thrust into the seat 33 by the action of the piston 35. Suitable conventional gaskets provide the seal during the infusion step. The return springs 44 return the guides 37 into their initial position when the chamber 31 and the piston 35 return into their rest position. This is achieved simply by shifting the lever 13 from the position of Figure 6 to the position of Figure 9 by passing through the positions of Figures 7 and 8. The withdrawal of the piston 35 from the chamber 31 causes the spring 22 to push from its seat 33 the used capsule 34 which, following the withdrawal of the piston 35, can fall below the unit 10, as shown in Figure 9. It should be noted that said guides, instead of moving apart by translating horizontally outwards (following engagement of the relative inclined surface 42 with the corresponding projection 43 of the chamber 31), could be moved apart by rotation about a relative vertical axis to achieve the same result of releasing the already used capsule.

It should again be noted that the lever 13 can be operated manually or by an automatic mechanism.

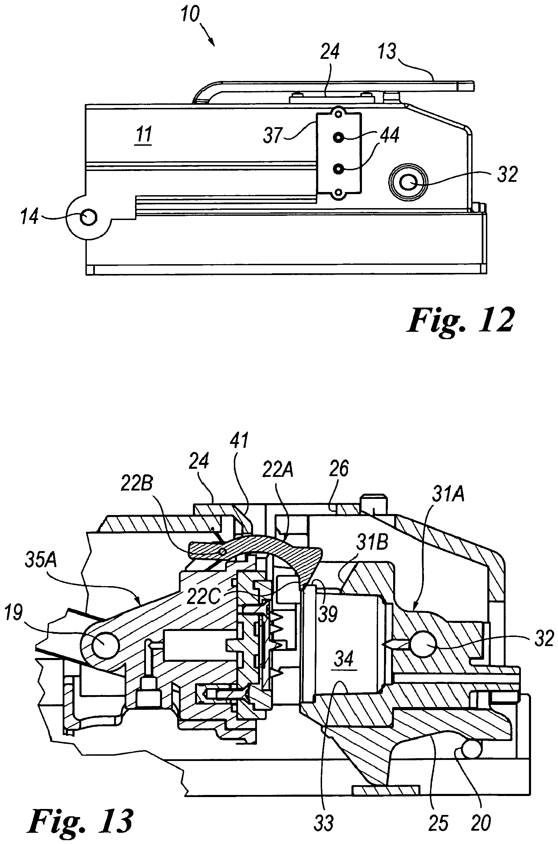

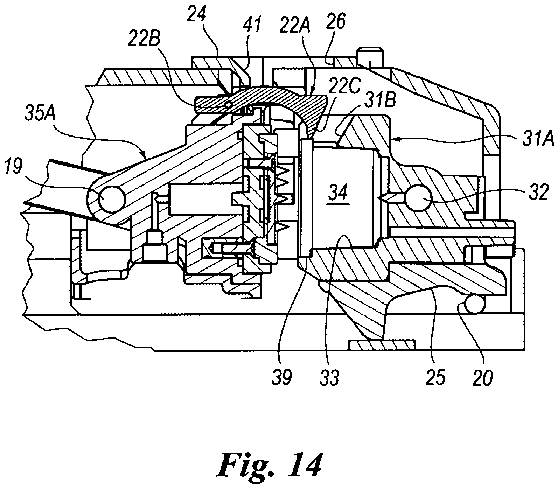

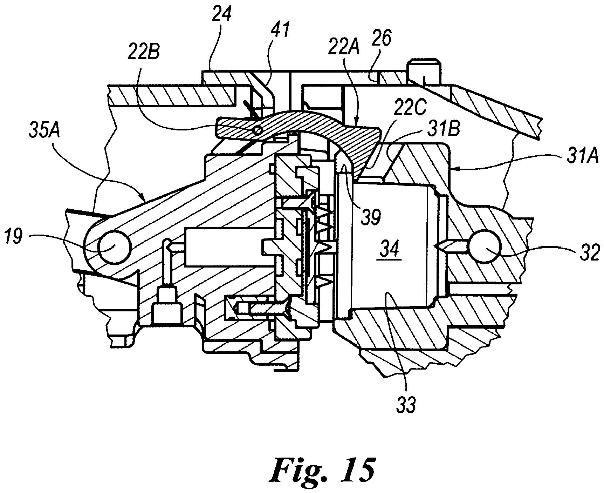

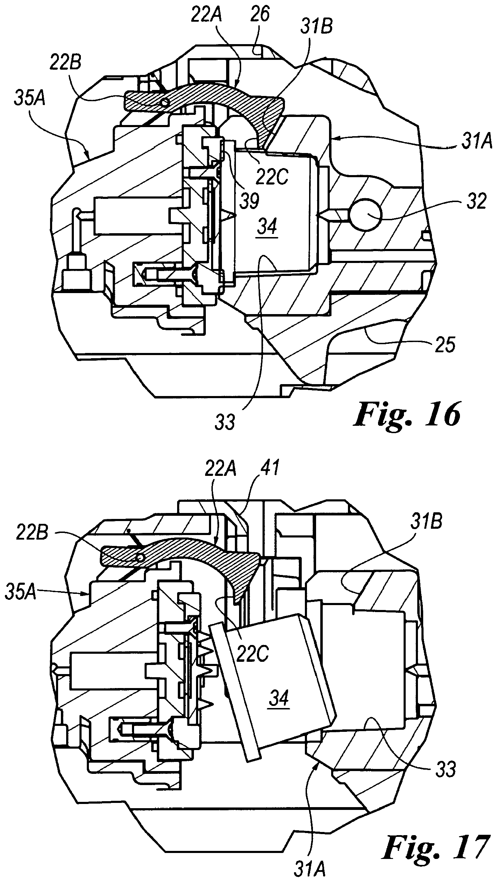

Figures 13-18 (in which elements identical to those of Figures 1-12 are indicated by the same reference numerals) show how, instead of using the spring 22 as the means for extracting the used capsule 34 from the seat 33 of the chamber 31A, a pawl 22A provided with a sawtoothed beak 22C can be used. The pawl 22A is pivoted at 22B to the piston 35A such as to be able to rotate within a determined angular range. The pawl 22A is maintained in a rest position (that of all Figures 13-18 except Figure 14) by the action of an elastic return element (not visible in the figures), for example a preloaded helical torsion spring. As scan be seen from the succession of Figures 13-18, when the piston 35A advances towards the chamber 31A, the front part 22C of the beak of the e pawl 22A interferes with the projecting edge of the capsule 34 (Figure 13), helping to insert it into the seat 33 of the chamber 31A which itself is approaching the piston 35A. Following the further approach of the piston 35A and chamber 31A, the front part of the beak 22C of the pawl 22A is pressed against the projecting edge 39 of the capsule 34 to hence, by virtue of the sawtooth shape of the beak 22C, snap beyond the edge 39 (Figures 14 and 15) to become positioned as shown in Figure 16.

To allow this, the chamber 31 A presents an undercut 31 B in which the front part of the pawl 22A enters.

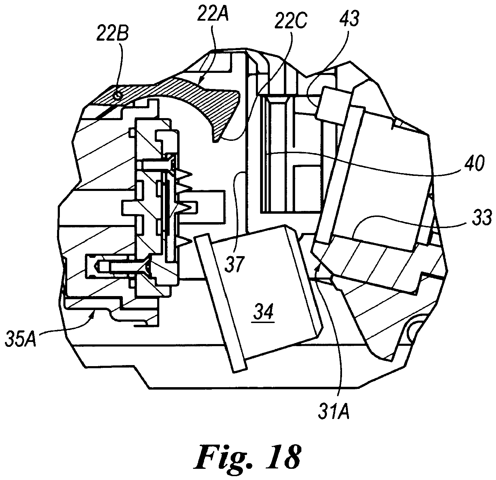

At this point it is apparent that when infusion has occurred and the piston 35A and chamber 31A begin to return to their rest position, the pawl 22A engages the projecting edge 39 of the used capsule 34 (hence reassuming the configuration of Figure 15) to cause extraction of this latter from the seat 33 of the chamber 31A (Figure 17). The used capsule 34, following withdrawal of the piston 35A and chamber 31A, finally falls below the infusion unit (Figure 18), so that this is ready to receive a new capsule 34.

It should be noted that the guides 37 with relative vertical grooves 40 are also used in the variant of Figures 13-18. As will be apparent from the aforegoing, the machine of the present invention presents an extremely simple infusion unit, the movement of the piston and of the rocking chamber being obtained by using a very simple mechanism composed of a small number of pieces compared with the similar mechanisms of infusion units of known machines of the same type. Moreover, by virtue of said guides, incorrect positioning of the capsule on its insertion into the infusion unit is prevented.

## Claims

1. A machine for preparing beverages by infusion using infusion capsules (34) provided with a projecting edge (39) and containing the substance which when infused produces the relative beverage, the machine being provided with an infusion unit (10) comprising:
- a piston (35; 35A) movable in the two directions between a first or rest position and a second or working position;
- a chamber (31; 31A) provided with a seat (33) for receiving an infusion capsule (34), the chamber (31; 31 A) being rotatable about a horizontal fixed pin (32) to swivel between a first position in which the capsule (34) is inserted, and a second or working position in which it cooperates with the piston (35; 35A) when in its second position to seal the capsule (34) within the chamber (31; 31 A);
- drive means comprising a lever system (13, 16), to move the piston (35; 35A) and chamber (31; 31A) from their first to their second position, and vice versa;
- means (22; 22A) to extract the used capsule (34) from the chamber (31 ; 31A) when this latter, after the infusion, is returned to its first position,
**characterised in that** a profile follower element (20) is rigid with the piston (35; 35A) to cooperate with a corresponding profile (25) rigid with the chamber (31; 31A), said profile (25) being shaped to move the chamber (31; 31A) from its first to its second position, and vice versa, as a consequence of the movement of the piston (35; 35A) from its first to its second position and vice versa; said means for extracting the used capsule (34) from the seat (33) of the chamber (31 A) comprising a pawl (22A) provided with a beak (22C) and sawteeth, the pawl (22A) being hinged to the piston (35A) to be able to rotate within a determined angular range and being maintained in a rest position by the action of an elastic return element such that when the piston (35A) advances towards the chamber (31A), the front part of the beak (22C) of the pawl (22A) interferes with the projecting edge (39) of the capsule (34) to aid its insertion into the seat (33), the beak (22C) by virtue of its shape being able to snap beyond this edge (39) such as to grip it and, once infusion has taken place, to cause extraction of the used capsule (34) when the piston (35A) and chamber (31A) begin to return into their rest position; said infusion unit (10) further comprising:
- two opposing guides (37) movable towards and away from each other, they being provided with a relative groove (40) into which when the guides (37) are close together the corresponding part of the projecting edge (39) of the capsule (34) is inserted, such that this latter remains retained in a position which enables it to be received in the seat (33) of the chamber (31; 31A) when this latter passes from its first to its second position;
- means for moving the guides (37) away from and towards each other such as to release the capsule (34), following the movement apart of the guides (37), just before the capsule (34) is completely received in the seat (33) of the chamber (31; 31A) by the movement of this latter into its second position.

2. A machine as claimed in claim 1, wherein the profile follower element (20) comprises a bar substantially transverse to the direction of movement of the piston (35; 35A), and of which the two ends are fixed to the corresponding free ends of two arms (18) disposed each on one side of the piston (35; 35A) and rigid therewith, and extending towards the chamber (31; 31A).

3. A machine as claimed in claim 1, wherein the lever system (13, 16) of the drive means comprises an operating lever (13) operable manually or by an automatic mechanism.

4. A machine as claimed in claim 1, wherein the means for extracting the capsule (34) comprise an elastic element (22) which is positioned on the base of the seat (33) of the chamber (31), and is compressed by the capsule (34) when the piston (35) and chamber (31) lie in their second position.

5. A machine as claimed in claim 1, wherein the means for moving the guides (37) away from and towards each other comprise:
- an inclined surface (42) provided in each guide (37) to cooperate with a relative projection (43) with which the chamber (31; 31A) is provided, such as to move the guides (37) apart just before the chamber reaches its second position;
- elastic return elements (44) to return the guides (37) into their together position when the action of the projection (43) on the relative inclined surfaces (42) ceases as a result of the return of the chamber (31; 31A) into its first position.

6. A machine as claimed in claim 1, wherein the infusion unit (10) comprises a cover (24) in which an opening (26) of substantially the profile of the capsule (34) is provided through which the capsule (24) can be inserted into the infusion unit (10) such that its projecting edge (39) is inserted directly into the relative grooves (40) of the guides (37).

7. A machine as claimed in claim 6, wherein the cover (24) presents, on that side of the opening (26) which lies on the same side as the projecting edge (39) of the capsule (34) when this is inserted into the opening (26), a bevel (41) arranged to facilitate insertion of the capsule (34).
